# EUROPEAN PATENT APPLICATION

(11) **EP 4 700 868 A2**
(43) Date of publication of application: **25.02.2026**
(21) Application number: 25197050.5
(22) Date of filing: 20.08.2025
(51) Int. Cl.: H01M 4/62, H01M 10/052, H01M 50/42, H01M 50/449

(54) **BINDER FOR RECHARGEABLE LITHIUM BATTERY, ELECTRODE INCLUDING THE SAME, AND RECHARGEABLE LITHIUM BATTERY INCLUDING THE SAME**

(30) Priority: 22.08.2024 KR 20240112986
(71) Applicant: SAMSUNG SDI CO., LTD., Yongin-si, Gyeonggi-do 17084 (KR)
(72) Inventor: LEE, Kukjoo, 17084 Yongin-si (KR); PARK, Sujin, 17084 Yongin-si (KR); CHO, Yunshik, 17084 Yongin-si (KR); LEE, Hyunseop, 17084 Yongin-si (KR); CHO, Minho, 17084 Yongin-si (KR); CHOI, Jewon, 17084 Yongin-si (KR); KIM, Eunji, 17084 Yongin-si (KR); JUNG, Kyunghwa, 17084 Yongin-si (KR)
(74) Representative: Meissner Bolte Partnerschaft mbB

(57) **Abstract**

The present invention relates to a binder for a rechargeable lithium battery, wherein the binder includes a first structural unit derived from a (meth)acrylic acid-based monomer, a second structural unit derived from a (C1-C10) alkylene glycol-based monomer and a third structural unit derived from a zwitterionic vinyl-based monomer or a zwitterionic (meth)acryl-based monomer. The binder for a rechargeable lithium battery may have high adhesive strength and low resistance, and thus can contribute to improving the performance of a rechargeable lithium battery.

## Description

### BACKGROUND

### 1. Field

Binders for rechargeable lithium batteries, and electrodes and rechargeable lithium batteries including the binders are disclosed.

### 2. Description of the Related Art

With increasing presence of electronic devices that use batteries, such as, e.g., mobile phones, laptop computers, electric vehicles, and the like, the demand for small, lightweight, and relatively high-capacity rechargeable batteries is increasing. In particular, rechargeable lithium batteries are attractive as a power source for portable devices because they are lightweight and have high energy density.

Rechargeable lithium batteries typically include a positive electrode and a negative electrode including an active material capable of intercalating and deintercalating lithium ions, and an electrolyte solution, and electrical energy is produced through oxidation and reduction reactions when lithium ions are intercalated and deintercalated from the positive electrode and the negative electrode.

Binders are included in various components of these rechargeable lithium batteries. The binder may have high adhesive strength, but binders with high adhesive strength generally have a disadvantage of high resistance.

### SUMMARY

The present invention relates to a binder for a rechargeable lithium battery with high adhesive strength and low resistance.

The present invention relates to a binder for a rechargeable lithium battery, wherein the binder includes a first structural unit derived from a (meth)acrylic acid-based monomer, a second structural unit derived from a (C1-C10) alkylene glycol-based monomer and a third structural unit derived from a zwitterionic vinyl-based monomer or a zwitterionic (meth)acryl-based monomer.

The present invention further concerns an electrode for a rechargeable lithium battery, wherein the electrode includes the binder for a rechargeable lithium battery and an electrode active material.

The present invention further pertains to a separator for a rechargeable lithium battery, wherein the separator includes a porous substrate, and a coating layer on one surface, or on both surfaces, of the porous substrate, wherein the coating layer includes the binder.

In another aspect, the present invention relates to a rechargeable lithium battery, wherein the battery includes a negative electrode; a positive electrode; a separator between the negative electrode and the positive electrode; and an electrolyte; wherein at least one of the negative electrode, the positive electrode, and the separator includes the binder of the present invention for a rechargeable lithium battery.

The binder for a rechargeable lithium battery may have high adhesive strength and low resistance, and thus can contribute to improving the performance of a rechargeable lithium battery.

### BRIEF DESCRIPTION OF THE DRAWINGS

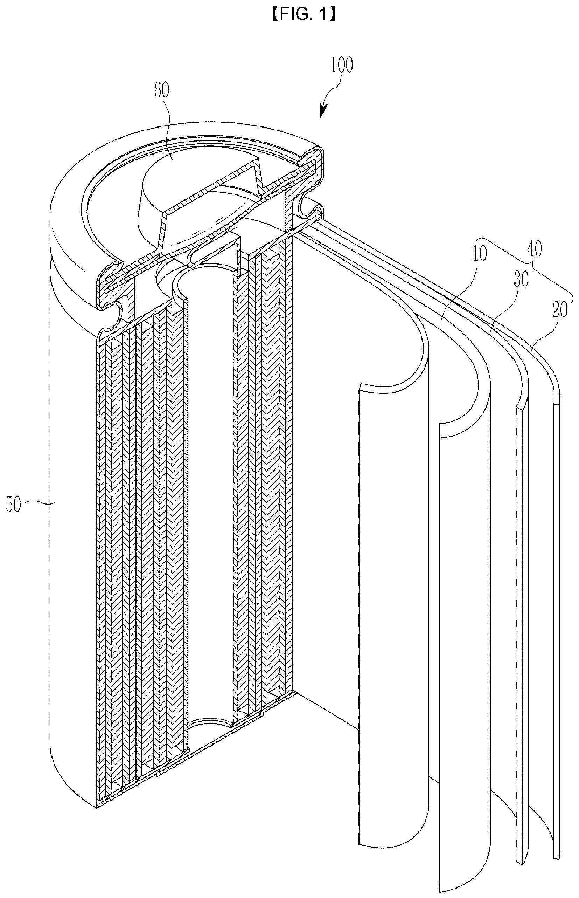

FIGS. 1 to 4 are schematic views illustrating a rechargeable lithium battery, according to some example embodiments.

### DETAILED DESCRIPTION

Hereinafter, example embodiments of the present disclosure are described in detail. However, these embodiments are examples, the present disclosure is not limited thereto, and the present disclosure is defined by the scope of the claims.

As used herein, when a specific definition is not otherwise provided, it is understood that when an element such as a layer, film, region, or substrate is referred to as being "on" another element, the element may be "directly on" the other element, or intervening elements may also be present.

As used herein, when a specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. This average particle diameter indicates an average particle diameter (D50), which is a diameter of particles with a cumulative volume of 50 volume% in the particle size distribution. The average particle diameter (D50) can be measured by methods known to those skilled in the art, for example, by measuring with a particle size analyzer, a transmission electron microscope or scanning electron microscope. Alternatively, a dynamic light-scattering measurement device is used to perform a data analysis, and the number of particles is counted for each particle size range. From this, the average particle diameter (D50) value may be easily obtained through a calculation. A laser diffraction method may also be used. When measuring by laser diffraction, for example, the particles to be measured are dispersed in a dispersion medium and subsequently introduced into a commercially available laser diffraction particle size measuring device (e.g., MT 3000 available from Microtrac, Ltd.) using ultrasonic waves at about 28 kHz, and after irradiation with an output of 60 W, the average particle diameter (D50) based on 50% of the particle size distribution in the measuring device can be calculated.

As used herein, when a specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, when a specific definition is not otherwise provided, "substituted" refers to replacement of at least one hydrogen atom by a substituent such as or including at least one of a halogen atom (F, Cl, Br, or I), a hydroxy group, a C1 to C20 alkoxy group, a nitro group, a cyano group, an amine group (or amino group), an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and a combination thereof.

Additionally, as used herein, when a specific definition is not otherwise provided, "hetero" indicates that the chemical formula contains at least one hetero atom of at least one of N, O, S, and P.

Additionally, as used herein, when a specific definition is not otherwise provided, "(meth)acrylate" indicates both "acrylate" and "methacrylate", and "(meth)acrylic acid" indicates both "acrylic acid" and "methacrylic acid".

As used herein, when a specific definition is not otherwise provided, "combination" refers to mixing or copolymerization.

In chemical formulas of the present specification, when a specific definition is not otherwise provided, hydrogen is bonded at the position when a chemical bond is not drawn where supposed to be given.

In this specification, the weight average molecular weight (Mw) may be a value measured using gel permeation chromatography (GPC).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Binder

The binder of the invention for a rechargeable lithium battery includes a first structural unit derived from a (meth)acrylic acid-based monomer; a second structural unit derived from a (C1-C10) alkylene glycol-based monomer; and a third structural unit derived from a zwitterionic vinyl-based monomer or a zwitterionic (meth)acryl-based monomer.

A binder having only the first structural unit and the second structural unit may increase the adhesive strength of the active material layer to the current collector, but may not sufficiently improve the electrical resistance of the active material layer. In addition, a binder having only the first structural unit and the third structural unit is substantially insoluble in water, making it challenging to manufacture an active material layer, and a viscosity thereof is too low, making it difficult to manufacture the target active material layer. Accordingly, a binder including a third structural unit in addition to including a first structural unit and a second structural unit may improve electrical resistance by increasing a degree of lithium ion transfer, as well as provide the desired adhesive strength.

Hereinafter, each structural unit is described in detail.

The first structural unit derived from the (meth)acrylic acid-based monomer may be represented by Chemical Formula 1-1 or 1-2:

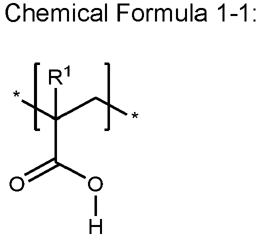

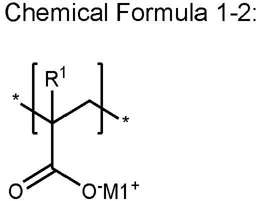

In Chemical Formulas 1-1 and 1-2, R¹ may be the same or different, and may each independently be or include a hydrogen atom or a C1 to C20 alkyl group, and M1 may be or include an alkali metal.

For example, the first structural unit may be derived from acrylic acid, the R¹ radicals can be all hydrogen atoms, and M1 may be derived from a metal ion in the electrolyte solution, for example, a lithium ion.

In some example embodiments, the first structural unit may be included in an amount in a range of about 50 wt% to about 98 wt%, about 60 wt% to about 90 wt%, or about 70 wt% to about 80 wt%, based on 100 wt% of the first structural unit, the second structural unit, and the third structural unit. In the above range, the binder has a desired viscosity, thereby facilitating the manufacture of an active material layer and improving adhesive strength.

The second structural unit derived from a (C1-C10) alkylene glycol-based monomer may be represented by Chemical Formula 2-1 or 2-2:

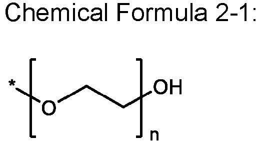

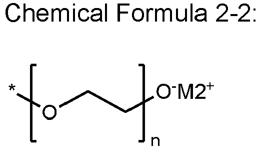

In Chemical Formula 2-1 and 2-2, M2 may be or include an alkali metal, and n may be an integer in a range from 1 to 100.

For example, the second structural unit can be derived from ethylene glycol, in which case n can be in a range from 5 to 20, or from 5 to 10, and M2 may be derived from a metal ion in the electrolyte solution, for example a lithium ion.

In some example embodiments, the second structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the binder may contribute to further reducing resistance by increasing ionic conductivity.

The third structural unit derived from the zwitterionic vinyl-based monomer or the zwitterionic (meth)acryl-based monomer has both a cationic functional group and an anionic functional group in the molecule, and may have at least one of a vinyl group and a (meth)acrylic group for polymerization with other structural units.

The cationic functional group may be or include a functional group exhibiting a monovalent or polyvalent positive charge in an aqueous solvent, and may be or include, for example, at least one of a substituted or unsubstituted ammonium cation (NH₄⁺), an imidazolium cation, a pyrazolium cation, a pyridinium cation, a piperidinium cation, a piperazinium cation, a sulfide cation, a naphthalenium cation, and a guanidium cation, but is not limited thereto. For example, the cationic functional group may be or include a substituted or unsubstituted ammonium cation or an imidazolium cation.

The anionic functional group may be or include a functional group exhibiting a monovalent or polyvalent negative charge in an aqueous solvent, and may be or include, for example, a functional group having at least one of sulfur (S), nitrogen (N), carbon (C), phosphorus (P), and oxygen (O). For example, the anionic functional group may be or include at least one of -SO₃⁻, -CO₂⁻, -O⁻-, and -NR⁻. Herein, R may be or include a substituted or unsubstituted alkyl group having 1 to 10 carbon atoms, or a haloalkyl group having 1 to 10 carbon atoms.

The third structural unit derived from a zwitterionic vinyl-based monomer or a zwitterionic (meth)acryl-based monomer may be represented by Chemical Formula 3-1 or 3-2.

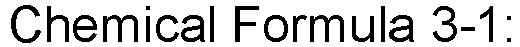

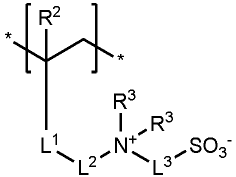

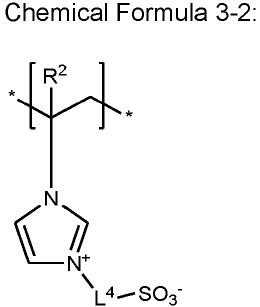

In Chemical Formulas 3-1 and 3-2, R² may be the same or different, and may each independently be or include a hydrogen atom or a C1 to C20 alkyl group; R³ may be the same or different, and may each independently be or include a hydrogen atom or a C1 to C20 alkyl group; L¹ may be or include *-(C=O)-NR³-CH₂-* or *-(C=O)-O-*; and L² to L⁴ may each independently be or include a single bond or a C1 to C20 alkylene group.

The third structural unit derived from the zwitterionic vinyl-based monomer or the zwitterionic (meth)acryl-based monomer may be derived from at least one of a sulfobetaine-based monomer, a phosphobetaine-based monomer, a carboxybetaine-based monomer, and an imidazolium-based monomer, and for example, may be derived from a sulfobetaine-based monomer or a vinylimidazolium sulfonate-based monomer.

When the third structural unit may be derived from sulfobetaine (SB) and may be represented by Chemical Formula 3-1, R² may be or include a methyl group; L¹ may be the same or different and may each independently be or include *-(C=O)-NR³-CH₂-* or *-(C=O)-O-*; and L² and L³ may both be or include ethylene groups.

When the third structural unit is derived from vinylimidazolium sulfonate (IMS) and is represented by Chemical Formula 3-2, R² may be or include a hydrogen atom; and L⁴ may be or include a butylene group.

In some example embodiments, the third structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the adhesive strength of the active material layer to the collector may be increased, and the electrical resistance may be reduced.

A weight ratio of the second structural unit to the third structural unit in the binder may be in a range of about 1:2 to about 3:1, for example, about 1:1 to about 3:1, about 1:1 to about 2:1, or about 1:1 to about 1.5:1. When the second structural unit and the third structural unit are included in the above weight ratio, the binder may increase the adhesive strength of the active material layer to the current collector, and may also reduce the electrical resistance.

In some example embodiments, the binder for a rechargeable lithium battery may further include a fourth structural unit derived from a (meth)acryl-based monomer.

The (meth)acryl-based monomer may include an amide group or a nitrile group. For example, the fourth structural unit may be derived from acrylonitrile.

The fourth structural unit derived from a (meth)acryl-based monomer may be represented by Chemical Formula 4.

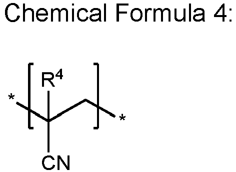

In Chemical Formula 4, R⁴ may be or include a hydrogen atom or a C1 to C20 alkyl group.

The fourth structural unit may be derived from, for example, acrylonitrile. For example, R⁴ may be or include a hydrogen atom.

In some example embodiments, based on 100 wt% of the first structural unit, the second structural unit, the third structural unit, and the fourth structural unit, the first structural unit may be included in an amount in a range of about 30 wt% to about 70 wt%, the second structural unit may be included in an amount of about 1 wt% to about 15 wt%, the third structural unit may be included in an amount of about 1 wt% to about 15 wt%, and the fourth structural unit may be included in an amount of about 20 wt% to about 50 wt%. For example, based on 100 wt% of the first structural unit, the second structural unit, the third structural unit, and the fourth structural unit, the first structural unit may be included in an amount in a range of about 40 wt% to about 60 wt%, the second structural unit may be included in an amount in a range of about 2 wt% to about 10 wt%, the third structural unit may be included in an amount in a range of about 2 wt% to about 10 wt%, and the fourth structural unit may be included in an amount in a range of about 25 wt% to about 45 wt%. As another example, the first structural unit may be included in an amount in a range of about 45 wt% to about 55 wt%, the second structural unit may be included in an amount in a range of about 5 wt% to about 10 wt%, the third structural unit may be included in an amount in a range of about 5 wt% to about 10 wt%, and the fourth structural unit may be included in an amount in a range of about 30 wt% to about 40 wt%. In any of the above ranges, the binder has a desired viscosity, thereby facilitating the manufacture of an active material layer and improving adhesive strength.

The binder according to some example embodiments may further include a lithium salt, in which case better lithium ionic conductivity may be achieved within the electrode, thereby improving the electrochemical performance of the battery. The binder may form a chemical bond, such as an ionic bond, with the cation and/or anion of the lithium salt, or the binder and the lithium salt may be mixed. The lithium salt may be or include any common lithium salt included in rechargeable lithium batteries without limitation, and may be or include, for example, at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, LiC₄F₉SO₃, LiFSI, LiTFSI, LiOTf, LiDFOB, LiBOB, and a combination thereof.

The binder according to some example embodiments may have a viscosity in a range of about 450 cps to about 6500 cps in an aqueous solution at about 25 °C, and having a solid content in a range of about 8.5 wt% to about 10 wt%.

### Method for Preparing Binder

A binder according to some example embodiments may be prepared by polymerizing a mixture of the monomers by a conventional method known to those skilled in the art. The polymerization may be or include emulsion polymerization, suspension polymerization, solution polymerization, and the like.

The emulsifier may be or include at least one of a higher fatty acid alkali salt, N-acrylamino acid salt, alkyl ether carbonate, acylated peptide, alkyl sulfonate, alkyl benzene sulfonate, alkyl amino acid salt, alkyl naphthalene sulfonate, sulfosuccinate, sulfonated oil, alkyl sulfate, alkyl ether sulfate, alkyl aryl ether sulfate, alkyl amide sulfate, alkyl phosphate, alkyl ethoxyphosphate and alkyl aryl ether phosphate, or a combination thereof. An example of an emulsifier may be sodium dodecylbenzene sulfonate. The alkyl group may be an alkyl group having 1 to 20 carbon atoms.

A content of the emulsifier may be in a range of about 0.1 to about 3 parts by weight, or about 0.1 to about 2 parts by weight, based on 100 parts by weight of the total content of the monomer mixture. When the content of the above emulsifier is within the above range, the adhesive strength can be further improved, and a binder having a desired size can be obtained so that desired dispersion occurs.

The initiator may be or include an azo compound initiator such as at least one of azobisisobutyronitrile, ammonium persulfate, potassium persulfate, hydrogen peroxide, t-butyl hydroperoxide, and a combination thereof.

A content of the initiator may be in a range of about 0.1 to about 3 parts by weight, or may be about 0.1 to about 2 parts by weight, based on 100 parts by weight of the total content of the monomer mixture.

The binder may have a weight average molecular weight (Mw) in a range of about 20,000 g/mol to about 1,500,000 g/mol, for example, about 50,000 g/mol to about 2,500,000 g/mol. Within the above range, the binder can be included in the active material layer. Herein, the "weight average molecular weight" may be a value calculated in polystyrene conversion terms by gel permeation chromatography.

The binder may be included as at least one of a binder for a positive electrode of a rechargeable lithium battery and a binder for a negative electrode of a rechargeable lithium battery.

### Rechargeable Lithium Battery

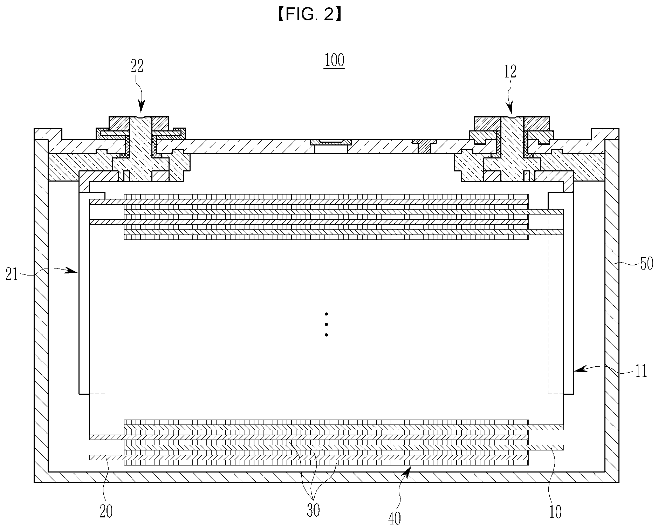

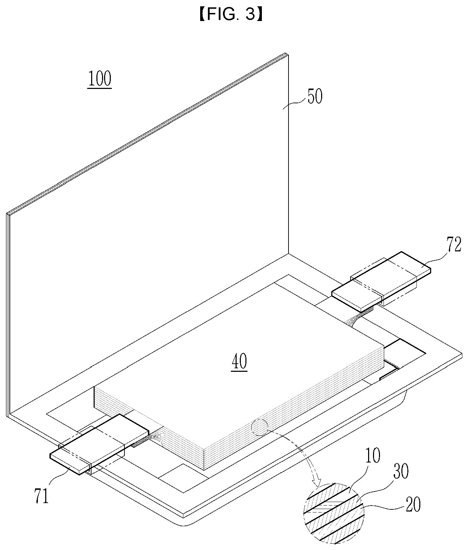

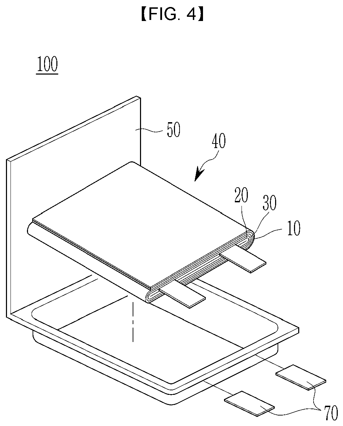

The rechargeable lithium battery may be classified into cylindrical, prismatic, pouch, or coin-type batteries, and the like, depending on a shape thereof. FIGS. 1 to 4 are schematic views illustrating the rechargeable lithium battery, according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 as illustrated in FIG. 4, or a positive electrode tab 71 and a negative electrode tab 72 as illustrated in FIG. 3, the electrode tabs 70/71/72 forming an electrical path for inducing the current formed in the electrode assembly 40 to the outside of the battery 100.

### Electrode

An electrode of the invention for a rechargeable lithium battery includes the aforementioned binder according to the invention and an electrode active material.

Some example embodiments include an electrode composition for a rechargeable lithium battery including the aforementioned binder, an electrode active material, and a solvent. An electrode including the binder may be manufactured by applying the electrode composition to a current collector, drying, and compressing.

The electrode may be or include a negative electrode or a positive electrode. The binder has high adhesive strength and low resistance even when included in a negative electrode that undergoes a large volume change due to charge and discharge of a rechargeable lithium battery, and thus can contribute to improving the performance of a rechargeable lithium battery.

Hereinafter, an electrode for a rechargeable lithium battery according to some example embodiments is described.

### Negative Electrode

The negative electrode includes a current collector, and a negative electrode active material layer on the current collector. The negative electrode active material layer includes a negative electrode active material, and may further include a binder and/or a conductive material. The binder may be a binder of the aforementioned example embodiment.

For example, the negative electrode active material layer may include about 90 wt% to about 99 wt%, or about 90 wt% to about 99.5 wt% of the negative electrode active material, about 0.5 wt% to about 5 wt% of the binder, and about 0 wt% to about 5 wt% of the conductive material.

The negative electrode active material may include at least one of a material that reversibly intercalates/deintercalates lithium ions, a lithium metal, a lithium metal alloy, a material capable of doping/dedoping lithium, and transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes an element such as at least one of an alkali metal, an alkalineearth metal, a Group 13 element, a Group 14 element (excluding Si), a Group 15 element, a Group 16 element, a transition metal, a rare earth element, and a combination thereof), and a combination thereof. The Sn-based negative electrode active material may be or include at least one of Sn, SnO₂, a Sn-based alloy, and a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

The binder is configured to adhere the negative electrode active material particles to each other, and to adhere the negative electrode active material to the current collector. The binder may be or include at least one of a non-aqueous binder, an aqueous binder, a dry binder, and a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrilebutadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

In addition to the binder according to the aforementioned example embodiment, other binders may be included or added as the negative electrode binder. When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof, may be mixed. The alkali metal may be or include at least one of Na, K, and Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, and a combination thereof.

The conductive material may be included to provide electrode conductivity, and any electrically conductive material may be included as a conductive material unless the electrically conductive material causes a chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Positive Electrode

The positive electrode may include a current collector, and a positive electrode active material layer formed on the current collector. The positive electrode active material layer may include a positive electrode active material, and may further include a binder and/or a conductive material. The binder may be or include the aforementioned binder of the example embodiment.

A content of the positive electrode active material may be in a range of about 90 wt% to about 99 wt%, or about 90 wt% to about 99.5 wt% based on 100 wt% of the positive electrode active material layer, and each content of the binder and the conductive material may be in a range of about 0.5 wt% to about 5 wt% based on 100 wt% of the positive electrode active material layer.

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, and a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, and a combination thereof; X is or includes at least one of Al, Ni, Co, Mn, Cr, Fe, Mg, Sr, V, a rare earth element, and a combination thereof; D is or includes at least one of O, F, S, P, and a combination thereof; G is or includes at least one of Al, Cr, Mn, Fe, Mg, La, Ce, Sr, V, and a combination thereof; and L¹ is or includes at least one of Mn, Al, and a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, and a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high-nickel positive electrode active material can achieve high capacity, and can be applied to high-capacity, high-density rechargeable lithium batteries.

In addition to the binder according to the invention, other binders may be included, or added as the positive electrode binder. The binder improves binding properties of positive electrode active material particles with one another, and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the electrically conductive material causes a chemical change. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

### Electrolyte

The electrolyte for a rechargeable lithium battery may be or include, for example, an electrolyte solution, which may include a non-aqueous organic solvent and a lithium salt.

The non-aqueous organic solvent may be configured as a medium for transmitting ions taking part in the electrochemical reaction of a battery. The non-aqueous organic solvent may be or include at least one of a carbonate-based, ester-based, ether-based, ketone-based, alcohol-based solvent, an aprotic solvent, and a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be included alone or in combination of two or more solvents, and when two or more types are included in combination, a mixing ratio can be adjusted as desired depending on the intended battery performance, which is widely understood by those working in the relevant field.

When using a carbonate-based solvent, a cyclic carbonate and a chain carbonate may be mixed, and the cyclic carbonate and the chain carbonate may be mixed in a volume ratio in a range of about 1:1 to about 1:9.

The non-aqueous organic solvent may further include an aromatic hydrocarbon-based organic solvent. For example, the carbonate solvent and the aromatic hydrocarbon organic solvent may be mixed in a volume ratio in a range of about 1:1 to about 30:1.

The electrolyte solution may further include at least one of vinylethyl carbonate, vinylene carbonate and ethylene carbonate compounds to improve battery cycle-life.

Representative examples of the ethylene carbonate compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery is configured to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has a desired ionic conductivity and viscosity, and thus a desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

In one embodiment, the organic material of the coating layer may include the aforementioned binder of the invention. A separator of the invention for a rechargeable lithium battery includes a porous substrate and a coating layer on one surface or, on both surfaces, of the porous substrate, wherein the coating layer includes the aforementioned binder of the invention. In the coating layer, the binder may be included in an amount in a range of about 1 wt% to about 100 wt%, for example, the binder may be included in an amount of about 1 wt% to about 10 wt%, about 1 wt% to about 5 wt%, or about 80 wt% to about 100 wt%, about 90 wt% to about 100 wt%, or about 91 wt% to about 99 wt%, and the like, together with the inorganic material. The separator including the aforementioned binder in the coating layer may realize desired or improved heat resistance and mechanical strength.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be in a range of about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Preparation Example 1

Based on 100 parts by weight of a monomer mixture including 50 wt% of acrylic acid (AA), 35 wt% of acrylonitrile (AN), 8 wt% of sulfobetaine (SB), and 7 wt% of ethylene glycol (EG), an azo compound initiator and water were mixed therewith. The initiator was used in an amount of 0.2 parts by weight based on 100 parts by weight of the monomer mixture.

Subsequently, a solution including a binder including a copolymer obtained by emulsion-polymerizing the obtained mixture was prepared. The prepared binder included a first structural unit derived from the acrylic acid, a second structural unit derived from the ethylene glycol, a third structural unit derived from the sulfobetaine, and a fourth structural unit derived from the acrylonitrile.

### Preparation Example 2

A binder was manufactured substantially in the same manner as in Preparation Example 1 with a difference that propylene glycol (PG) was used instead of the ethylene glycol (EG).

### Preparation Example 3

A binder was manufactured substantially in the same manner as in Preparation Example 1 with a difference that vinylimidazolium sulfonate (IMS) was used instead of the sulfobetaine (SB).

### Preparation Example 4

A binder was manufactured substantially in the same manner as in Preparation Example 2 with a difference that vinylimidazolium sulfonate (IMS) was used instead of the sulfobetaine (SB).

### Preparation Example 5

Based on 100 parts by weight of a monomer mixture including 55 wt% of acrylic acid (AA) and 45 wt% of acrylonitrile (AN), an azo compound initiator and water were mixed therewith. The initiator was used in an amount of 0.2 parts by weight based on 100 parts by weight of the monomer mixture.

Subsequently, a solution including a binder including a copolymer obtained by emulsion-polymerizing the obtained mixture was prepared.

### Preparation Example 6

A binder was manufactured substantially in the same manner as in Preparation Example 5 with a difference that acryloamide (AM) was used instead of the acrylonitrile (AN).

### Preparation Example 7

Based on 100 parts by weight of a monomer mixture including 50 wt% of acrylic acid (AA) and 50 wt% of sulfobetaine (SB), an azo compound initiator and water were mixed therewith

The initiator was included in an amount of 0.2 parts by weight based on 100 parts by weight of the monomer mixture.

Subsequently, a solution including a binder including a copolymer obtained by emulsion-polymerizing the obtained mixture was prepared.

### Preparation Example 8

A binder was manufactured substantially in the same manner as in Preparation Example 7 with a difference that acrylonitrile (AN) was used instead of the acrylic acid (AA).

### Preparation Example 9

A binder was manufactured substantially in the same manner as in Preparation Example 7 with a difference that vinylimidazolium sulfonate (IMS) was used instead of the sulfobetaine (SB).

### Preparation Example 10

A binder was manufactured substantially in the same manner as in Preparation Example 9 with a difference that acrylonitrile (AN) was used instead of the acrylic acid (AA).

### Preparation Example 11

Based on 100 parts by weight of a monomer mixture including 45 wt% of acrylic acid (AA), 40 wt% of acrylonitrile (AN), and 15 wt% of sulfobetaine (SB), an azo compound initiator and water were mixed therewith

The initiator was used in an amount of 0.2 parts by weight based on 100 parts by weight of the monomer mixture.

Subsequently, a solution including a binder including a copolymer obtained by emulsion-polymerizing the obtained mixture was prepared.

### Preparation Example 12

A binder was manufactured substantially in the same manner as in Preparation Example 11 with a difference that acryloamide (AM) was used instead of the acrylonitrile (AN).

### Preparation Example 13

A binder was manufactured substantially in the same manner as in Preparation Example 11 with a difference that vinylimidazolium sulfonate (IMS) was used instead of the sulfobetaine (SB).

### Preparation Example 14

A binder was manufactured substantially in the same manner as in Preparation Example 12 with a difference that vinylimidazolium sulfonate (IMS) was used instead of the sulfobetaine (SB).

Types and contents of the monomers included in the binders according to the preparation examples are shown in Table 1 below.

**Table 1:**

| | AA | AN | AM | SB | IMS | EG | PG |
|---|---|---|---|---|---|---|---|
| Preparation Example 1 | 50 | 35 | - | 8 | - | 7 | - |
| Preparation Example 2 | 50 | 35 | - | 8 | - | - | 7 |
| Preparation Example 3 | 50 | 35 | - | - | 8 | 7 | - |
| Preparation Example 4 | 50 | 35 | - | - | 8 | - | 7 |
| Preparation Example 5 | 55 | 45 | - | - | - | - | - |
| Preparation Example 6 | 55 | - | 45 | - | - | - | - |
| Preparation Example 7 | 50 | - | - | 50 | - | - | - |
| Preparation Example 8 | - | 50 | - | 50 | - | - | - |
| Preparation Example 9 | 50 | - | - | - | 50 | - | - |
| Preparation Example 10 | - | 50 | - | - | 50 | - | - |
| Preparation Example 11 | 45 | 40 | - | 15 | - | - | - |
| Preparation Example 12 | 45 | - | 40 | 15 | - | - | - |
| Preparation Example 13 | 45 | 40 | - | - | 15 | - | - |
| Preparation Example 14 | 45 | - | 40 | - | 15 | - | - |

As for the binders, each content of acrylic acid (AA), acrylonitrile (AN), acryloamide (AM), sulfobetaine (SB), vinylimidazolium sulfonate (IMS), ethylene glycol (EG), and propylene glycol (PG) were expressed in weight percent (wt%) based on 100 wt% of a total amount of each binder.

### 1. Evaluation of Negative Electrode Use of Binder

### Example 1

### (1) Manufacturing of Negative Electrode

93.4 wt% of a graphite negative electrode active material, 4 wt% of a silicon-carbon composite negative electrode active material, 1.0 wt% of the binder according to Preparation Example 1, 1.5 wt% of styrene-butadiene (SBR), and 0.1 wt% of a conductive material were mixed in a water solvent to prepare a negative electrode active material layer slurry. The negative electrode active material layer slurry was coated on a copper foil current collector, and subsequently dried and compressed to manufacture a negative electrode.

### (2) Manufacturing of Positive Electrode

97.0 wt% of a (LiNi_{0.88}Co_{0.105}Al_{0.015}O₂) positive electrode active material, 1.5 wt% of a polyvinylidene fluoride binder, and 1.5 wt% of a carbon nanotube conductive material were mixed to prepare a positive electrode active material layer slurry, and this positive electrode active material layer slurry was coated on an aluminum foil current collector, and subsequently dried and compressed to manufacture a positive electrode.

### (3) Preparation of Electrolyte Solution

Ethylene carbonate (EC), ethylmethyl carbonate (EMC), and dimethyl carbonate (DMC) were mixed in a volume ratio of 2:4:4 to prepare an organic solvent, and LiPF₆ lithium salt was mixed with the organic solvent at a concentration of 1.15 M to obtain an electrolyte solution.

### (4) Manufacturing of a Rechargeable Lithium Battery Cell

The positive and negative electrodes were assembled with a polyethylene separator coated with an acryl-based function layer to obtain an electrode assembly, and after housing the electrode assembly into a prismatic case, the electrolyte solution was injected thereinto, thus forming a rechargeable lithium battery cell.

### Examples 2 to 4

Each rechargeable lithium battery cell was manufactured substantially in the same manner as in Example 1 with a difference that the binder of Preparation Example 2 in Example 2, the binder of Preparation Example 3 in Example 3, and the binder of Preparation Example 4 in Example 4 were respectively used instead of the binder of Preparation Example 1 in manufacturing the negative electrode.

### Comparative Examples 1 to 10

Each rechargeable lithium battery cell was manufactured substantially in the same manner as in Example 1 with a difference that the binder of Preparation Example 5 in Comparative Example 1, the binder of Preparation Example 6 in Comparative Example 2, the binder of Preparation Example 7 in Comparative Example 3, the binder of Preparation Example 8 in Comparative Example 4, the binder of Preparation Example 9 in Comparative Example 5, the binder of Preparation Example 10 in Comparative Example 6, the binder of Preparation Example 11 in Comparative Example 7, the binder of Preparation Example 12 in Comparative Example 8, the binder of Preparation Example 13 in Comparative Example 9, and the binder of Preparation Example 14 in Comparative Example 10 were respectively used instead of the binder of Preparation Example 1 in manufacturing the negative electrode.

### Evaluation Example 1: Slurry Viscosity

One gram (g) of each slurry according to Examples 1 to 4 and Comparative Examples 1 to 10 was measured with respect to viscosity at 25 °C in a flow viscosity measuring method by using a rheometer (Anton Paar GmbH), and the results are shown in Table 2 below.

### Evaluation Example 2: Electrode Plate Adhesive Strength

The negative electrodes according to Examples 1 to 4 and Comparative Examples 1 to 10 were respectively measured with respect to adhesive strength between current collector and negative electrode active material layer by using Universal Testing Machine (UTM) tensile strength tester. A sample was prepared by attaching a slide glass (length x width = 7 cm x 2.5 cm) to one side of a double-sided adhesive tape (length x width = 4 cm x 2.5 cm) and each of the negative electrodes (length x width = 7 cm x 2.5 cm) onto the other side of the double-sided adhesive tape. The sample was mounted on the UTM tensile strength tester, and subsequently measured with respect to adhesive strength by peeling off the negative electrode from the slide glass at a peeling angle: 180° , a peeling temperature: 25 °C, and a peeling speed: 100 mm/min, and the results are shown in Table 2 below.

**Table 2:**

| | Binder | Slurry viscosity (cPs) | Electrode plate adhesive strength (gf/mm) |
|---|---|---|---|
| Example 1 | Preparation Example 1 | 1752 | 1.80 |
| Example 2 | Preparation Example 2 | 1846 | 1.90 |
| Example 3 | Preparation Example 3 | 1320 | 1.41 |
| Example 4 | Preparation Example 4 | 1435 | 1.56 |
| Comparative Example 1 | Preparation Example 5 | 2020 | 1.81 |
| Comparative Example 2 | Preparation Example 6 | 2154 | 1.94 |
| Comparative Example 3 | Preparation Example 7 | 1250 | 0.81 |
| Comparative Example 4 | Preparation Example 8 | 1436 | 0.84 |
| Comparative Example 5 | Preparation Example 9 | 745 | 0.51 |
| Comparative Example 6 | Preparation Example 10 | 850 | 0.42 |
| Comparative Example 7 | Preparation Example 11 | 1860 | 1.78 |
| Comparative Example 8 | Preparation Example 12 | 1750 | 1.89 |
| Comparative Example 9 | Preparation Example 13 | 1456 | 1.12 |
| Comparative Example 10 | Preparation Example 14 | 1650 | 1.24 |

Referring to Table 2, the slurries and negative electrodes of the examples, compared to the slurries and negative electrodes of the comparative examples, exhibited a desired slurry viscosity and a desired or improved adhesive strength to the negative electrode current collector.

### Evaluation Example 3: Battery Cell Characteristics Evaluation

### 1. Charging Rate

The battery cells of Examples 1 to 4 and Comparative Examples 1 to 10 were evaluated by charging them to a cut-off voltage of 4.25 V at constant current of 1.0 C at 25 °C. In the corresponding charging method, maximum charge capacity at which the cells reached 4.25 V was used to calculate a percentage (%) of the 'maximum charge capacity / total battery capacity,' which is shown as a charging rate in Table 3 below.

### 2. DC-IR (Direct Current Internal Resistance)

The battery cells of Examples 1 to 4 and Comparative Examples 1 to 10 having cell capacity of 75 mAh were charged with a constant current/constant voltage under conditions of 0.2 C, 4.25 V, and 0.05 C cut-off, paused for 10 minutes, discharged at a constant current of 0.33 C under a condition of 2.80 V cut-off, and paused for 10 minutes at 25 °C to perform the 1^{st} charging and discharging, and subsequently measured with respect to a voltage drop (V) occurring when a current of 1 C was passed for 10 second at SOC50 (a state of being charged to 50% of charge capacity based on 100% of total charge capacity, which also indicates a state of being discharged to 50% during the discharging), and subsequently, this voltage drop was used to measure direct current internal resistance (DC-IR), and the results are shown in Table 3 below.

### 3. 200 Cycle-life Retention Rate

The cells of Examples 1 to 4 and Comparative Examples 1 to 10 were constant current-charged to a voltage of 4.2 V at a rate of 0.5 C, and subsequently cut off at a rate of 0.025 C in the constant voltage mode at 25 °C. Subsequently, the cells were discharged to 2.5 V at a rate of 0.5 C, and this charge and discharge cycle was 200 times repeated to evaluate a capacity retention rate according to the number of cycles, that is, cycle-life retention rate, and the results are shown in Table 3 below.

**Table 3:**

| | Charging rate (%) | DC-IR (Ω) | Cycle-life retention rate (%) |
|---|---|---|---|
| Example 1 | 86.2 | 0.864 | 96.0 |
| Example 2 | 85.4 | 0.872 | 95.8 |
| Example 3 | 87.4 | 0.853 | 94.7 |
| Example 4 | 86.1 | 0.871 | 95.4 |
| Comparative Example 1 | 74.2 | 1.124 | 93.1 |
| Comparative Example 2 | 72.4 | 1.21 | 92.8 |
| Comparative Example 3 | 78.2 | 1.102 | 89.1 |
| Comparative Example 4 | 77.4 | 1.082 | 87.2 |
| Comparative Example 5 | 82.5 | 1.012 | 84.1 |
| Comparative Example 6 | 81.0 | 1.054 | 83.9 |
| Comparative Example 7 | 82.1 | 1.012 | 95.5 |
| Comparative Example 8 | 81.7 | 1.025 | 96.1 |
| Comparative Example 9 | 82.5 | 1.021 | 94.2 |
| Comparative Example 10 | 81.7 | 1.034 | 94.1 |

Referring to Table 3 above, the rechargeable lithium battery cells according to the examples, compared to the rechargeable lithium battery cells according to the comparative examples, exhibited an equivalent or desired or improved cycle-life retention rate, as well as an improved charging rate and reduced DC-IR.

### 2. Evaluation of Positive Electrode Use of Binder

### Example 5

### (1) Manufacturing of Positive Electrode

95.8 wt% of LFP (lithium iron phosphate active material) as a positive electrode active material, 2.0 wt% of carbon nanotube as a conductive material, and 2.2 wt% of the binder of Preparation Example 1 were mixed, and water was added thereto to prepare a positive electrode slurry, and this positive electrode slurry was subsequently coated on an aluminum foil current collector, and dried and compressed to manufacture a positive electrode.

### (2) Manufacturing of Negative Electrode

97.4 wt% of a graphite negative electrode active material, 1.0 wt% of carboxylmethyl cellulose, 1.5 wt% of a styrene-butadiene-based rubber, and 0.1 wt% of carbon nanotube as a conductive material were mixed to prepare a negative electrode active material slurry, and this negative electrode active material slurry was coated on a copper foil current collector, and subsequently dried and compressed to manufacture a negative electrode.

### (3) Preparation of Electrolyte Solution

Ethylene carbonate (EC), ethylmethyl carbonate (EMC), and dimethyl carbonate (DMC) were mixed in a volume ratio of 2:4:4 to prepare an organic solvent, and LiPF₆ lithium salt was added thereto at a concentration of 1.15 M to obtain an electrolyte solution.

### (4) Manufacturing of Rechargeable Lithium Battery Cell

The positive electrode and negative electrode were assembled with a polyethylene separator coated with an acryl-based function layer to obtain an electrode assembly, and after housing the electrode assembly into a prismatic case, the electrolyte solution was injected thereinto to manufacture a rechargeable lithium battery cell.

### Examples 6 to 8

Each rechargeable lithium battery cell was manufactured substantially in the same manner as in Example 5 with a difference that the binder of Preparation Example 2 in Example 6, the binder of Preparation Example 3 in Example 7, and the binder of Preparation Example 4 in Example 8 were respectively used instead of the binder of Preparation Example 1 in manufacturing the positive electrode.

### Comparative Examples 11 to 16

Each rechargeable lithium battery cell was manufactured substantially in the same manner as in Example 5 with a difference the binder of Preparation Example 5 in Comparative Example 11, the binder of Preparation Example 6 in Comparative Example 12, the binder of Preparation Example 11 in Comparative Example 13, the binder of Preparation Example 12 in Comparative Example 14, the binder of Preparation Example 13 in Comparative Example 15, the binder of Preparation Example 14 in Comparative Example 16 were respectively used instead of the binder of Preparation Example 1 in manufacturing the positive electrode.

### Evaluation Example 4: Slurry Viscosity

The slurries of Examples 5 to 8 and Comparative Examples 11 to 16 were measured with respect to viscosity substantially in the same manner as in Evaluation 1, and the results are shown in Table 4 below.

### Evaluation Example 5: Electrode Plate Adhesive Strength

The positive electrodes according to Examples 5 to 8 and Comparative Examples 11 to 16 were evaluated with respect to adhesive strength between current collector and positive electrode active material layer substantially in the same manner as in Evaluation Example 2, and the results are shown in Table 4 below.

**Table 4:**

| | Binder | Slurry viscosity (cPs) | Electrode plate adhesive strength (gf/mm) |
|---|---|---|---|
| Example 5 | Preparation Example 1 | 4860 | 1.32 |
| Example 6 | Preparation Example 2 | 5441 | 1.41 |
| Example 7 | Preparation Example 3 | 6200 | 1.11 |
| Example 8 | Preparation Example 4 | 5810 | 1.02 |
| Comparative Example 11 | Preparation Example 5 | 5520 | 1.20 |
| Comparative Example 12 | Preparation Example 6 | 4821 | 0.94 |
| Comparative Example 13 | Preparation Example 11 | 6750 | 0.84 |
| Comparative Example 14 | Preparation Example 12 | 4605 | 0.80 |
| Comparative Example 15 | Preparation Example 13 | 2480 | 0.52 |
| Comparative Example 16 | Preparation Example 14 | 3810 | 0.62 |

Referring to Table 4, the slurries and positive electrodes of the examples, compared to the slurries and positive electrodes of the comparative examples, exhibited a desired slurry viscosity and a desired or improved adhesive strength to the positive electrode current collector.

### Evaluation Example 6: Battery Cell Characteristics Evaluation

The battery cells of Examples 5 to 8 and Comparative Examples 11 to 16 were evaluated with respect to characteristics substantially in the same manner as in Evaluation Example 3, and the results are shown in Table 5 below.

**Table 5:**

| | Charging rate (%) | DC-IR (Ω) | Cycle-life retention rate (%) |
|---|---|---|---|
| Example 5 | 82.1 | 0.97 | 97.8 |
| Example 6 | 83.2 | 1.01 | 97.4 |
| Example 7 | 84.5 | 1.02 | 96.2 |
| Example 8 | 84.4 | 0.95 | 96.4 |
| Comparative Example 11 | 74.5 | 1.12 | 93.0 |
| Comparative Example 12 | 73.1 | 1.24 | 93.2 |
| Comparative Example 13 | 70.4 | 1.24 | 94.4 |
| Comparative Example 14 | 83.2 | 1.00 | 94.8 |
| Comparative Example 15 | 83.1 | 0.98 | 90.8 |
| Comparative Example 16 | 82.0 | 1.023 | 90.2 |

Referring to Table 5, the rechargeable lithium battery cells of the examples, compared to the rechargeable lithium battery cells of the comparative examples, exhibited an equivalent or desired or improved cycle-life retention rate, as well as an improved charging rate and reduced DC-IR.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A binder for a rechargeable lithium battery, the binder comprising:
a first structural unit derived from a (meth)acrylic acid-based monomer;
a second structural unit derived from a (C1-C10) alkylene glycol-based monomer; and
a third structural unit derived from a zwitterionic vinyl-based monomer or a zwitterionic (meth)acryl-based monomer.

2. The binder as claimed in claim 1, wherein the first structural unit is represented by Chemical Formula 1-1 or 1-2, and
the second structural unit is represented by Chemical Formula 2-1 or 2-2: 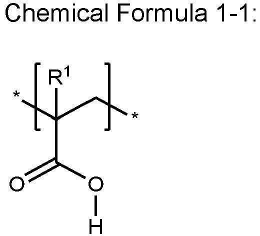 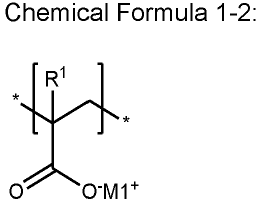 wherein, in Chemical Formulas 1-1 and 1-2,
each R¹ independently comprises a hydrogen atom or a C1 to C20 alkyl group; and
M1 comprises an alkali metal, 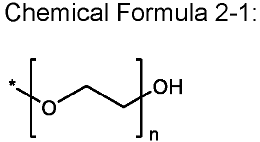 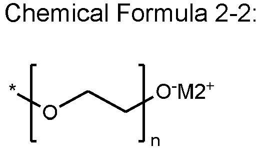 wherein, in Chemical Formulas 2-1 and 2-2,
M2 comprises an alkali metal, and
n is an integer in a range between 1 and 100.

3. The binder as claimed in claim 1 or 2, wherein:
the zwitterionic vinyl-based monomer or zwitterionic (meth)acryl-based monomer has at least one cationic functional group comprising at least one of a substituted or unsubstituted ammonium cation, an imidazolium cation, a pyrazolium cation, a pyridinium cation, a piperidinium cation, a piperazinium cation, a sulfide cation, a naphthalenium cation, and a guanidium cation.

4. The binder as claimed in any of claims 1-3, wherein:
the zwitterionic vinyl-based monomer or zwitterionic (meth)acryl-based monomer has at least one anionic functional group comprising at least one of - SO₃⁻, -CO₂⁻, -O⁻-, and -NR⁻, and
R comprises a substituted or unsubstituted C1 to C10 alkyl group or C1 to C10 haloalkyl group.

5. The binder as claimed in any of claims 1-4, wherein the zwitterionic vinyl-based monomer or zwitterionic (meth)acryl-based monomer comprises at least one of a sulfobetaine-based monomer, a phosphobetaine-based monomer, a carboxybetaine-based monomer, and an imidazolium-based monomer.

6. The binder as claimed in any of claims 1-5, wherein the third structural unit is represented by Chemical Formula 3-1 or 3-2: 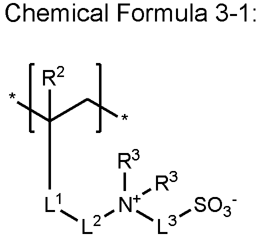 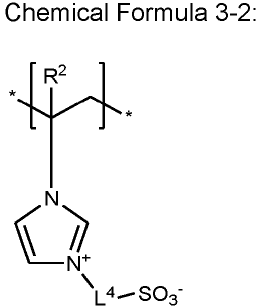 wherein, in Chemical Formulas 3-1 and 3-2,
each R² independently comprises a hydrogen atom or a C1 to C20 alkyl group;
each R³ independently comprises a hydrogen atom or a C1 to C20 alkyl group;
L¹ comprises *-(C=O)-NR³-CH₂-* or *-(C=O)-O-*; and
L² to L⁴ each independently comprises a single bond or a C1 to C20 alkylene group.

7. The binder as claimed in any of claims 1-6, wherein based on 100 wt% of the first structural unit, the second structural unit, and the third structural unit:
the first structural unit is included in an amount in a range of 50 wt% to 98 wt%,
the second structural unit is included in an amount in a range of 1 wt% to 25 wt%, and
the third structural unit is included in an amount in a range of 1 wt% to 25 wt%.

8. The binder as claimed in any of claims 1-7, further comprising a fourth structural unit derived from a (meth)acryl-based monomer.

9. The binder as claimed in claim 8, wherein the (meth)acryl-based monomer comprises one of an amide group and a nitrile group, optionally wherein the fourth structural unit is represented by Chemical Formula 4: 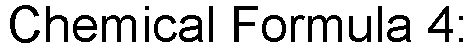 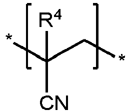 wherein, in Chemical Formula 4,
R⁴ comprises a hydrogen atom or a C1 to C20 alkyl group.

10. The binder as claimed in claim 8 or 9, wherein based on 100 wt% of the first structural unit, the second structural unit, the third structural unit, and the fourth structural unit:
the fourth structural unit is included in an amount in a range of 20 wt% to 50 wt%, optionally wherein
the first structural unit is included in an amount in a range of 30 wt% to 70 wt%,
the second structural unit is included in an amount in a range of 1 wt% to 15 wt%, and
the third structural unit is included in an amount in a range of 1 wt% to 15 wt%.

11. The binder as claimed in any of claims 1-10, further comprising a lithium salt.

12. The binder as claimed in any of claims 1-11, wherein the binder has a viscosity in a range of 450 cps to 6500 cps in an aqueous solution at about 25 °C, and has a solid content in a range of 8.5 wt% to 10 wt%.

13. An electrode for a rechargeable lithium battery, the electrode comprising:
the binder as claimed in any of claims 1-12; and
an electrode active material,
optionally wherein the electrode comprises a negative electrode, wherein the negative electrode preferably comprises a negative electrode active material comprising at least one of a carbon-based negative electrode active material, and a silicon-based negative electrode active material.

14. A separator for a rechargeable lithium battery, the separator comprising:
a porous substrate, and a coating layer on one surface or on both surfaces of the porous substrate,
wherein the coating layer comprises the binder as claimed in any of claims 1-12.

15. A rechargeable lithium battery, comprising:
a negative electrode;
a positive electrode;
a separator between the negative electrode and positive electrode; and
an electrolyte;
wherein at least one of the negative electrode, the positive electrode, and
the separator comprises the binder as claimed in any of claims 1-12.
